# EUROPEAN PATENT SPECIFICATION

(11) **EP 2 426 759 B1**
(45) Date of publication and mention of the grant of the patent: **31.12.2014**
(21) Application number: 11178853.5
(22) Date of filing: 25.08.2011
(51) Int. Cl.: H01M 2/34

(54) **Battery**
Batterie
Batterie

(30) Priority: 01.09.2010 JP 2010195821; 01.09.2010 JP 2010195822
(43) Date of publication of application: 07.03.2012
(73) Proprietor: FDK Twicell Co., Ltd., Gunma 370-0071 (JP)
(72) Inventor: Nagai, Tatsuya, Takasaki-shi, Gunma 370-0071 (JP); Izumi, Koji, Takasaki-shi, Gunma 370-0071 (JP); Wada, Satoshi, Takasaki-shi, Gunma 370-0071 (JP); Yano, Takayuki, Takasaki-shi, Gunma 370-0071 (JP)
(74) Representative: Epping - Hermann - Fischer

(56) References cited:
- EP-A1- 1 422 771
- EP-A1- 2 043 181
- JP-A- 2008 251 692
- US-A1- 2005 026 033
- US-A1- 2006 008 698
- US-A1- 2008 102 367

## Description

### BACKGROUND OF THE INVENTION

### Field of the Invention

The invention relates to a battery, and more specifically, to a small battery such as an AA-size battery that has been widely used.

### Description of the Related Art

In recent years, small batteries such as AA-size batteries and those of a compatible shape, typified by alkaline storage batteries, have been very widely used in electric appliances, toys, etc. These small batteries include cylindrical storage batteries, such as manganese batteries, alkaline manganese batteries, nickel batteries, and nickel hydrogen batteries.

A cylindrical storage battery has a positive terminal and a negative terminal in the outer surface of a casing, and is so configured that the casing contains the members constituting an electrode group, that is, positive and negative plates and a separator.

These small batteries are known to generate heat due to the excessive current that flows inside the casing when there is a short circuit outside the casing.

Given this factor, various kinds of batteries have been developed, which prevents excessive current by using a resistor element and thus avoids heat generation in the event of a short circuit outside the casing - see Unexamined Japanese Patent Publication No. 58-188066, Unexamined Japanese Patent Publication No. 10-275612, and Unexamined Japanese Patent Publication No. 2002-110137.

However, the batteries disclosed in JP 58-188066, JP 10-275612 and JP 2002-110137 have the problem that if the resistor element has a high resistance value, this degrades the performance of the batteries under normal use.

Particularly, the battery disclosed in JP 10-275612 is configured so that a resistor element is placed outside the casing. This produces a high amount of heat generation of the resistor element outside the casing, which is not preferable.

There are battery packs consisting of a plurality of batteries, the safety of which is ensured by installing a PTC (positive temperature coefficient) thermistor in a conductive path. The PTC thermistor is installed with the purpose of controlling current in the battery to prevent a rapid temperature rise utilizing the PTC thermistor's property that electric resistance increases, and thus ensuring the safety.

The PTC thermistor controls current, for example, using insulating polymer in which conductive particles are dispersed, utilizing the property that the entire insulating polymer is expanded by the heat generated when high current flows due to an external short circuit or the like, and that this expansion reduces contact between the conductive particles and causes an abrupt increase in resistance value. Needless to say, once the heat generation is discontinued, the insulating polymer cools down and shrinks, and the resistance value is reduced again.

One possible solution is to incorporate the PTC thermistor serving as a resistor element into a one-cell battery so as to be placed along another hard member. In the foregoing configuration, however, the expansion of the insulating polymer in the PTC thermistor is hampered, and an excessive current cannot be fully prevented. In result, there remains the problem that the heat generation cannot be adequately controlled.

As a way to take advantage of the above property of the PTC thermistor, it has been under consideration to install the PTC thermistor in a portion of a conductive member that conducts between the terminals situated outside the casing and the electrode plates situated inside the casing, or more specifically, as described in JP 58-188066, a portion of a positive tab that conducts between a positive terminal and a positive plate, the portion being exposed in an interior space of the casing.

The interior space of the casing between the positive terminal and the positive plate, in which the PTC thermistor is placed, is filled with a gas atmosphere that is a mixture of an oxygen constituent (high-pressure oxygen atmosphere) produced by chemical reaction during charge/discharge and an alkaline constituent (alkaline atmosphere) produced by electrolyte existing inside the battery.

When exposed to an oxygen atmosphere and an alkaline atmosphere, however, the PTC thermistor is influenced by oxygen and alkaline constituents, and fails to fulfill the function of controlling current. The oxygen constituent in the atmosphere erodes the resin of the PTC thermistor and a conductive agent, and the alkaline constituent erodes a soldered part (bonded part) in which the PTC thermistor and the positive tab are bonded together. In result, the PTC thermistor is deteriorated or becomes nonfunctional.

To solve the above issue, the PTC thermistor installed in the casing is pinched inside a sealed module constituting a part of the casing of the cylindrical storage battery as shown in JP 10-275612 or is placed in the electrode plates of the electrode group of a cylindrical storage battery as shown in JP 2002-110137. In this way, the PTC thermistor is incorporated and sealed inside a component situated in a place other than the interior space of the casing, thereby being protected from deterioration. In some cases, to encourage the protection of the PTC thermistor, the entire sealed module and the PTC thermistor of the electrode group are sealed with a synthetic resin member.

On the other hand, in order to incorporate the PTC thermistor into a narrow area, such as a sealed module and the electrode plates of an electrode group shown in JP 10-275612 and JP 2002-110137, it is required to situate the PTC thermistor along another hard member. In other words, the PTC thermistor is surrounded by the components of the hard sealed module, the hard members of the electrode group, etc. The PTC thermistor therefore possibly interferes with these components and members, and is prevented from being expanded, failing to adequately fulfill the function of controlling current.

EP 2043181 A1 discloses a battery with a protection circuit module having a positive temperature coefficient device connected to terminals of a protection circuit board. A PTC main body of the PTC device is coated with oxidation resistance material to prevent the PTC main body from being oxidized.

EP 1422771 A1 discloses a thermal fuse and a PTC element being disposed inside a battery case. The thermal fuse and the PTC element contact electrolyte contained in the battery case. The thermal fuse and the PTC element are covered with an insulating resin that is chemically stable when in contact with the electrolyte. As resin material silicon resin or epoxy resin is used.

US 2005/0026033 A1 dislcoses a battery with a PTC element being partially located outside the casing of the battery. It further discloses that an olefin resin film is formed on an inner wall of a PTC element ring.

US 2006/0008698 A1 discloses an electrochemical device having a protection device that may be incorporated as a PTC sheet, being coated with a polymer, examples of the polymer including polyethylene, polypropylene, polyurethane, epoxy resin and silicon.

Especially, in the case of the configuration where the PTC thermistor is placed in the electrode group of the battery as in JP 2002-110137, there is a concern that the heat generation caused by battery charge/discharge may influence the operations of the PTC thermistor. That is to say, if placed in the electrode section, the PTC thermistor is located close to a heating element and is therefore influenced by the temperature produced by the battery charge/discharge. The PTC thermistor comes to a temperature close to Trip (resistance rise reaction) temperature as a result of normal charge/discharge. Once this happens, an initial resistance value is slowly increased during the use of the PTC thermistor, and resistance is not successfully recovered after the PTC thermistor's temperature reaches the Trip temperature and then drops down.

Moreover, in the configuration where the PTC thermistor is placed in the electrode section, even if the positive tab generates heat during short circuit, it takes time until the PTC thermistor starts operating due to a large distance between the positive tab and the interior of the electrode group in which the PTC thermistor is placed. In other words, even if the PTC thermistor comes into a Trip state after the positive tab reaches the Trip temperature, a separator between the positive tab and the PTC thermistor is melted by heat, and one of the electrode plates might contact the other, which hinders the PTC thermistor's function of ensuring safety.

For the above-mentioned reason, it is difficult to retain the reliability of the PTC thermistor and make the PTC thermistor ensure the safety of the battery.

The invention has been made in light of the above circumstances. It is an object of the invention to provide a battery that is improved in safety by preventing heat generation during an external short circuit without being degraded in performance under normal use.

### SUMMARY OF THE INVENTION

The invention has been made to solve the above-mentioned problem. It is an object of the invention to provide a battery that is improved in safety by preventing heat generation during an external short circuit without being degraded in performance under normal use.

To achieve the above object, the battery of the invention is characterized in that an internal resistance is equal to or lower than 70 mΩ, and that a temperature rise of the battery during an external short circuit at an ambient temperature of 23 °C with a margin of error of plus or minus 2 °C does not exceed 45 °C. If the internal resistance of the battery is maintained equal to or lower than 70 mΩ, this prevents a degradation in the normal use performance during the normal use of the battery. Furthermore, if the temperature rise during the external short circuit of the battery at an ambient temperature of 23 °C with a margin of error of plus or minus 2 °C is maintained lower than 45 °C, a highly safe battery can be materialized.

If the internal resistance of the battery is maintained equal to or lower than 70 mΩ, this makes it possible to maintain an operating voltage at the time of 740-mA discharge during the normal use of the battery to be equal to or higher than 1.20 V and thus prevent a degradation in the normal use performance. Furthermore, if the temperature rise during the external short circuit of the battery at an ambient temperature of 23 °C with a margin of error of plus or minus 2 °C is maintained lower than 45 °C, a highly safe battery can be materialized.

The battery has a casing provided with a positive terminal and a negative terminal on an outer surface thereof. The casing contains a positive plate, a negative plate, and a separator. At least one of the terminals and the corresponding electrode plate are conducted to each other by a conducting member situated in the casing. The conducting member includes a PTC thermistor in a portion exposed in an interior space in the casing. The PTC thermistor is coated with a flexible protection layer that protects the PTC thermistor from an oxygen constituent and an alkaline constituent, which are contained in a gas atmosphere filled in the interior space of the casing.

Since the PTC thermistor is situated in the interior space of the casing, it is easy for the PTC thermistor to expand, so that the properties and operations of the PTC thermistor are not influenced.

Moreover, since the PTC thermistor is coated with the flexible protection layer, the PTC thermistor is prevented from being deteriorated by the oxygen and alkaline constituents contained in the gas atmosphere, without hampering the properties and operations of the PTC thermistor.

Consequently, the safety of an alkaline storage battery can be sufficiently ensured by using the PTC thermistor.

The protection layer is configured in a multilayer structure including a flexible oxygen-proof protection layer that covers the periphery of the PTC thermistor and a flexible alkali-proof protection layer that covers the periphery of the oxygen-proof protection layer. With such a configuration, the PTC thermistor can be adequately protected by the simple multilayer structure that uses the flexible oxygen-proof protection layer and the flexible alkali-proof protection layer.

Preferably, the battery is an AA-size battery. AA-size batteries are very widely used in electric appliances, toys, etc. The invention can be suitably applied to these batteries that are very widely used.

Preferably, the battery is a nickel hydrogen battery. Nickel hydrogen batteries are very widely used in the electric appliances, toys, etc. The invention can be suitably applied to these batteries that are very widely used.

Preferably, the conducting member is a positive tab that conducts between the positive terminal and the positive plate. Such a configuration enables the use of a structure that prevents the deterioration of the PTC thermistor. Especially, since the PTC thermistor is situated in the empty interior space of the casing, which is located between the positive terminal and the positive plate, it can be expected that the capacity of the battery is increased, and thus that the performance of the battery is improved because of the use of the unused interior space of the casing.

Preferably, the oxygen-proof protection layer is formed by coating the periphery of the PTC thermistor with an epoxy resin member, and the alkali-proof protection layer is formed by covering the periphery of the coating layer of the epoxy resin member with a plurality of strips of polypropylene tape.

With such a configuration, it is possible by doing simple work to form the oxygen-proof protection layer and the alkali-proof protection layer without difficulty, and to easily prevent the deterioration of the PTC thermistor.

### BRIEF DESCRIPTION OF THE DRAWINGS

FIG. 1 is a perspective view, partially cut away, showing the entire structure of a nickel hydrogen battery according to one embodiment of the invention;
FIG. 2 is a cross-sectional view showing a PTC thermistor that is situated in a positive tab of the nickel hydrogen battery;
FIG. 3 is a perspective view showing a protection structure of the PTC thermistor; and
FIG. 4 is an exploded perspective view showing the protection structure of the PTC thermistor.

### DETAILED DESCRIPTION OF THE PREFERRED EMBODIMBNTS

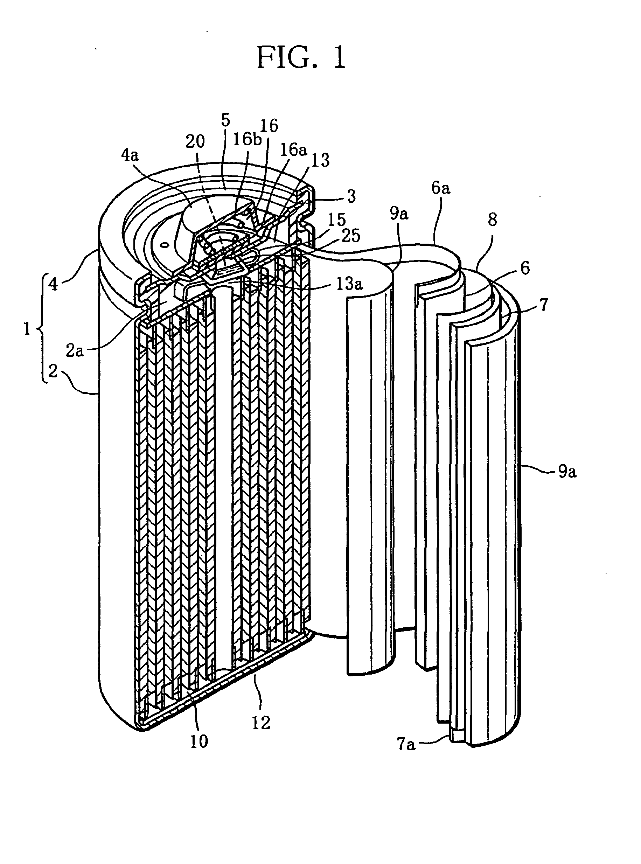

The present invention will be described below on the basis of one embodiment shown in FIGS. 1 to 4.

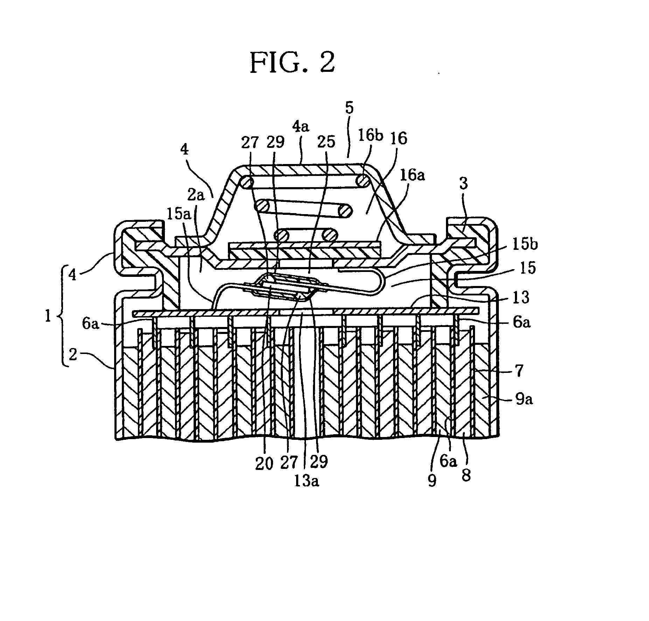

FIG. 1 is a perspective view, partially cut away, showing a battery applied to the invention, for example, an AA-size nickel hydrogen battery that is one type of an AA-size alkaline storage battery. FIG. 2 is a cross-sectional view showing in an enlarged scale a structure of a positive-electrode side of the nickel hydrogen battery. In this specification, an AA-size nickel hydrogen battery has a height ranging from 49.2 mm to 50.5 mm and an external diameter ranging from 13.5 mm to 14.5 mm. In FIGS. 1 and 2, a cylindrical casing of the nickel hydrogen battery is provided with reference mark "1".

As shown in FIGS. 1 and 2, the casing 1 is formed of a conductive cylindrical outer can 2, a conductive disc-shaped sealed module 4 (collection of various members 4) that is situated to block an opening of the outer can 2, and a ringshaped insulating member 3 that insulates between an opening edge of the outer can 2 and an outer periphery of the sealed module 4. The casing 1 is sealed.

An electrode group is contained in the outer can 2 constituting the casing 1. As shown in FIGS. 1 and 2, the electrode group is formed of a laminate sheet 9 that is made by rolling into a spiral shape a strip-shaped positive plate 6 that is filled, for example, with nickel hydroxide particles (positive active material), a strip-shaped negative plate 7 that is filled, for example, with hydrogen storage alloy (negative active material), and an insulating separator 8 maintaining an alkaline electrolyte and intervening between the positive plate 6 and the negative plate 7. Needless to say, the wound components are insulated by an insulating member 9a to avoid short circuit. A lateral edge of the negative plate 7, that is, a pantograph terminal 7a formed in a lower edge of the negative plate 7, is conducted to the outer can 2 through a plate-shaped negative pantograph member 10. The pantograph terminal 7a and the negative pantograph member 10 constitute a negative terminal 12 in a bottom face of the outer can 2.

As shown in FIGS. 1 and 2, a lateral edge of the positive plate 6, that is, a pantograph terminal 6a formed in an upper edge of the positive plate 6, is conducted to a plate-shaped positive pantograph member 13 having a through-hole 13a. The positive pantograph member 13 is a component installed right above the electrode group. The positive pantograph member 13 is connected to the sealed module 4 through a conducting member, or a positive tab 15, situated in an interior space 2a of the casing which is created between the electrode group and the sealed module 4. A protrusion 4a formed in a center of an outer face of the sealed module 4 serves as a positive terminal 5. Installed in the protrusion 4 serving as the positive terminal 5 is a relief valve 16 that releases the gas generated inside the battery when the gas increases an inner pressure equal to or higher than predetermined pressure. A member provided with a reference mark "16a" in FIGS. 1 and 2 is a valve body of the relief valve 16, and a member with "16b" is a spring. The relief valve 16 is not necessarily of a spring-valve type, and may be formed in another valve structure, such as a rubber-valve type structure. The relief valve 16 only has to allow the gas to escape.

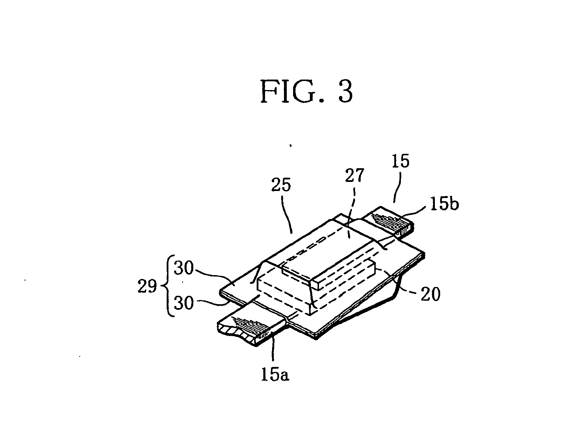

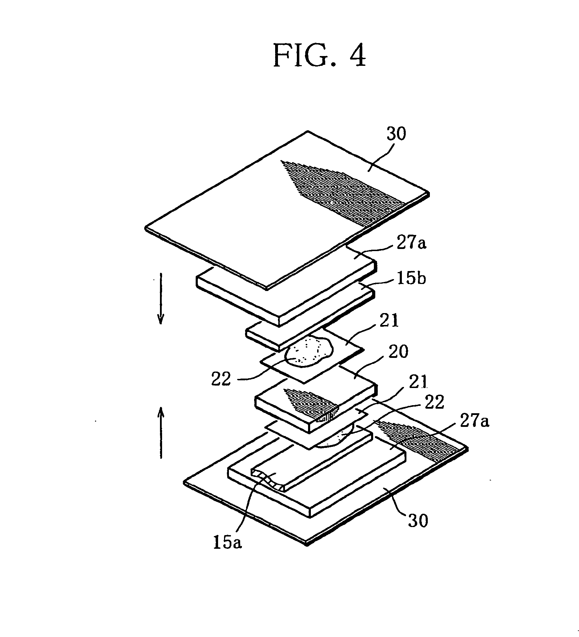

As shown in FIGS. 1 and 2, a thin plate-shaped PTC thermistor 20 is situated in the positive tab 15. The positive tab 15 is divided, for example, in the middle into an L-shaped tab portion 15a extending from the positive pantograph member 13 and a U-shaped tab portion 15b extending from the sealed module 4. The PTC thermistor 20 is situated between a tip end of the tab portion 15a and that of the tab portion 15b, which are detached away from and opposite to each other. FIG. 3 is a perspective view showing a protection structure of the PTC thermistor 20. FIG. 4 is an exploded perspective view showing the protection structure of the PTC thermistor 20.

According to an example shown in FIGS. 2, 3 and 4, upper and lower faces of the PTC thermistor 20 are soldered to the tip ends of the tab portions 15a and 15b, respectively.

The PTC thermistor 20 is accordingly arranged in series in the positive tab 15. In order to enhance the adhesiveness of the PTC thermistor 20, a fixed structure is employed in which the PTC thermistor 20 is soldered by solder 22 to a pair of metal plates, not shown, constituting a connection terminal between the PTC thermistor 20 and the tip ends of the tab portions 15a and 15b, with a nickel film 21 intervening therebetween as shown in FIG. 4.

The PTC thermistor 20 is made, for example, of insulating polymer in which conductive particles are dispersed. Current is thus controlled utilizing the property that the entire insulating polymer is expanded by the heat generated when high current flows due to a short circuit that occurs outside the casing, and the like, and that this expansion reduces contact between the conductive particles and causes an abrupt increase in resistance value. Once the heat generation is discontinued, the insulating polymer cools down and shrinks, and the resistance value becomes low again.

The PTC thermistor 20 disposed in the interior space 2a of the casing can be expanded without difficulty because there is not any hard component or member nearby, which might interfere with the PTC thermistor 20. Furthermore, a surrounding environment of the PTC thermistor 20 is not likely to influence the properties and operations of the PTC thermistor 20. On the other hand, the PTC thermistor 20 might be deteriorated because it is exposed to a gas atmosphere filled in the interior space 2a of the casing, or more specifically, a gas atmosphere that is a mixture of an oxygen constituent (high-pressure oxygen atmosphere) produced by chemical reaction during charge/discharge and an alkaline constituent (alkaline atmosphere) produced by electrolyte, not shown, existing inside the battery.

Given the foregoing factor, some means has been taken to prevent the deterioration of the PTC thermistor 20 without hindering the functions of the PTC thermistor 20 and influencing the operations of the PTC thermistor 20. As this means, the present embodiment employs a structure that protects the PTC thermistor 20 from the oxygen and alkaline constituents contained in the gas atmosphere by coating the periphery of the PTC thermistor 20 with a flexible protection layer 25 as shown in FIGS. 1 and 2. The protection structure of the PTC thermistor 20 is particularly illustrated in FIGS. 2 and 3. For easy understanding of the protection structure, FIGS. 2 and 3 show each part of the protection layer 25 on a slightly large scale.

The protection structure will be described below. As shown in FIGS. 2 and 3, the protection layer 25 is formed in a multilayer structure of an oxygen-proof protection layer 27 that is disposed to cover the periphery of the PTC thermistor 20 and blocks the passing of the oxygen constituent in the gas atmosphere, and an alkali-proof protection layer 29 that is disposed to cover the periphery of the oxygen-proof protection layer 27 and blocks the passing of the alkaline constituent in the gas atmosphere. In the oxygen-proof protection layer 27, for example, flexible epoxy resin members 27a, shown only in FIG. 4, are applied onto the periphery of an overlapping part of the tab portions 15a and 15b, where the PTC thermistor 20 intervenes therebetween, and the PTC thermistor 20. In other words, the oxygen-proof protection layer 27 is formed so that the overlapping part of the tab portions 15a and 15b, where the PTC thermistor 20 intervenes therebetween, and the PTC thermistor 20 are covered with the epoxy resin members 27a. It is a matter of course that any other synthetic resin members than the epoxy resin members 27a may be utilized as long as they are synthetic resin members having flexibility and resistance properties against the oxygen constituent.

The alkali-proof protection layer 29 includes, for example, a flexible thin tape 30 made of polypropylene, that is, two pieces of polypropylene tape 30 as shown in FIGS. 3 and 4. The polypropylene tape 30 is applied so as to sandwich a coat layer made of one of the epoxy resin members 27a corresponding to one side of the PTC thermistor 20 and a coat layer made of the other epoxy resin members 27a corresponding to the other side of the PTC thermistor 20, and to cover the whole periphery of the coat layers of the epoxy resin members 27a. In short, the alkali-proof protection layer 29 is formed of a polypropylene tape layer. The alkali-proof protection layer 29 may be coated with polypropylene, instead of being formed of the tape 30, or may be formed of another member that is flexible and blocks the passing of the alkaline constituent, for example, a nylon-based member, such as nylon 6, nylon 11, nylon 12, nylon 66, nylon 610, nylon 6T, nylon 9T, nylon MST, and nylon 612, polyamide-based resin, alkali-proof rubber, mineral synthetic resin (asphalt) or the like.

Assuming that, for example, a short circuit outside the casing (or an excessive high current charge/discharge) occurs in the nickel hydrogen battery configured as described above, the entire insulating polymer is expanded in the PTC thermistor 20 by the heat generated when high current flows at the time of the short circuit, which reduces contact between the conductive particles and rapidly increases the resistance value. As the expansion of the insulating polymer takes place in the interior space 2a of the casing in which there is not any hard member nearby, which might interfere with the PTC thermistor 20, the resistance value of the PTC thermistor 20 is quickly increased to a required resistance value. The current is thus controlled, and the heat generation of the battery is prevented. When a current value is restored to a normal value (or when battery discharge is finished), the resistance value of the PTC thermistor 20 returns to a lower value.

At this point of time, the interior space 2a of the casing is filled with the gas atmosphere that is the mixture of the oxygen constituent (high-pressure oxygen atmosphere) produced by chemical reaction during charge/discharge and an alkaline constituent (alkaline atmosphere) produced by the electrolyte existing in the battery. This causes a concern that the PTC thermistor 20 (resin) and the bonded part (soldered part) of the PTC thermistor 20 might be eroded by the above constituents.

Since the entire PTC thermistor 20 is covered with the oxygen-proof protection layer 27 as shown in FIGS. 2, 3 and 4, the PTC thermistor 20 itself is prevented from being eroded by the oxygen constituent. The periphery of the oxygen-proof protection layer 27 is covered with the alkali-proof protection layer 29, so that the oxygen-proof protection layer 27 is protected from the erosion attributable to the alkaline constituent, preventing the erosion of the soldered part in which the PTC thermistor 20 and the tab portions are bonded together.

The protection layer 25 thus protects the PTC thermistor 20 (resin) and the soldered part of the PTC thermistor 20 from the oxygen and alkaline constituents contained in the gas atmosphere.

Because of flexibility, the protection layer 25 does not hinder the expansion of the PTC thermistor 20.

For that reason, the PTC thermistor 20 is easily expanded. Due to the combination of the installation of the PTC thermistor 20 into the interior space 2a of the casing to be located at a position where the properties and resistance recovery of the PTC thermistor 20 are not influenced, and the coating of the PTC thermistor 20 with the flexible protection layer 25, it is possible to make the PTC thermistor 20 fully exert the property of controlling high current and control the heat generation of the battery without influencing the oxygen and alkaline constituents contained in the gas atmosphere filling the interior space 2a of the casing and without hindering the properties and operations of the PTC thermistor 20.

Consequently, the safety of the battery can be sufficiently ensured by using the PTC thermistor 20.

The protection layer 25 is simply configured in a multilayer structure that is formed of the oxygen-proof protection layer 27 covering the PTC thermistor 20 and the alkali-proof protection layer 29 covering the periphery of the oxygen-proof protection layer 27. Especially, the oxygen-proof protection layer 27 is formed by the coating with the epoxy resin member 27a, whereas the alkali-proof protection layer 29 is formed by the application of a plurality of strips of the polypropylene tape 30. In this way, both the layers are formed by simple work, thereby preventing the deterioration of the PTC thermistor 20 without difficulty.

### (Embodiment)

An embodiment of the battery according to the invention will be described below in comparison with conventional batteries of various kinds.

As shown in TABLES 1 and 2, a research was conducted on operating voltage during 740-mA discharge, temperature rise during an external short circuit in a charging state at an ambient temperature of 23 °C with a margin of error of plus or minus 2 °C, whether there is a liquid leakage after short circuit, and the reusability after short circuit, while varying the kinds of batteries, internal resistance, presence or absence of the PTC thermistor 20, and cable short circuit resistance. TABLE 1 shows a case in which the cable short circuit resistance is 2.5 mΩ, and TABLE 2 shows a case in which the cable short circuit resistance is 100 mΩ.

In TABLES 1 and 2, Embodiment 1 is a nickel hydrogen battery having the above-described configuration and having an internal resistance of 25 mΩ.

In TABLES 1 and 2, Embodiment 2 is a nickel hydrogen battery having the above-described configuration and having an internal resistance of 70 mΩ.

In TABLES 1 and 2, Comparative Example 1 is a nickel hydrogen battery having a PTC thermistor and having an internal resistance of 80 mΩ. In TABLES 1 and 2, Comparative Example 2 is a nickel hydrogen battery having a PTC thermistor and having an internal resistance of 130 mΩ.

In TABLES 1 and 2, Comparative Example 3 is a nickel hydrogen battery that does not have a PTC thermistor and has an internal resistance of 23 mΩ.

In TABLES 1 and 2, Comparative Example 4 is an alkaline manganese battery that does not have a PTC thermistor and has an internal resistance of 110 mΩ.

In TABLES 1 and 2, Comparative Example 5 is a manganese battery that does not have a PTC thermistor and has an internal resistance of 400 mΩ.

In TABLES 1 and 2, Comparative Example 6 is a nickel battery that does not have a PTC thermistor and has an internal resistance of 100 mΩ.

**TABLE 1**

| Cable short circuit resistance 2.5mΩ | Battery | Internal resistance (mΩ) | PTC thermistor | Operating voltage (740-mA discharge) (V) | Temperature rise during short circuit in a charging state (°C) | Liquid leakage after short circuit | Reusability after short circuit |
|---|---|---|---|---|---|---|---|
| Embodiment 1 | Nickel hydrogen battery | 25 | Present | 1.260 | 20 | Absent | Reusable |
| Embodiment 2 | Nickel hydrogen battery | 70 | Present | 1.200 | 15 | Absent | Reusable |
| Comparative Example 1 | Nickel hydrogen battery | 80 | Present | 1.190 | 15 | Absent | Reusable |
| Comparative Example 2 | Nickel hydrogen battery | 130 | Present | 1.140 | 25 | Absent | Reusable |
| Comparative Example 3 | Nickel hydrogen battery | 23 | Absent | 1.260 | 110 | Present | Nonreusable |
| Comparative Example 4 | Alkaline manganese battery | 110 | Absent | 1.172 | 100 | Present | - |
| Comparative Example 5 | Manganese battery | 400 | Absent | 1.100 | 60 | Absent | - |
| Comparative Example 6 | Nickel battery | 100 | Absent | 1.338 | 100 | Present | - |

**TABLE 2**

| Cable short circuit resistance 100 mΩ | Battery | Internal resistance (mΩ) | PTC thermistor | Operating voltage (740-mA discharge) (V) | Temperature rise during short circuit in a charging state (°C) | Liquid leakage after short circuit | Reusability after short circuit |
|---|---|---|---|---|---|---|---|
| Embodiment 1 | Nickel hydrogen battery | 25 | Present | 1.260 | 15 | Absent | Reusable |
| Embodiment 2 | Nickel hydrogen battery | 70 | Present | 1.200 | 11 | Absent | Reusable |
| Comparative Example 1 | Nickel hydrogen battery | 80 | Present | 1.190 | 12 | Absent | Reusable |
| Comparative Example 2 | Nickel hydrogen battery | 130 | Present | 1.140 | 30 | Absent | Reusable |
| Comparative Example 3 | Nickel hydrogen battery | 23 | Absent | 1.260 | 65 | Absent | Reusable |
| Comparative Example 4 | Alkaline manganese battery | 110 | Absent | 1.172 | 73 | Absent | - |
| Comparative Example 5 | Manganese battery | 400 | Absent | 1.100 | 53 | Absent | - |
| Comparative Example 6 | Nickel battery | 100 | Absent | 1.338 | 85 | Absent | - |

In the batteries of Embodiments 1 and 2 of the invention, the operating voltage during 740-mA discharge under the normal use of the battery can be made equal to or higher than 1.20 V by setting the internal resistance at 25 mΩ or 70 mΩ, that is, by setting the internal resistance equal to or lower than 70 mΩ. If the cable short circuit resistance is 2.5 mΩ or 100 mΩ, the temperature rise during an external short circuit at an ambient temperature of 23 °C with a margin of error of plus or minus 2 °C can be controlled not to exceed 45 °C due to the functions of the PTC thermistor, thereby meeting official standard values (ST standard of the Japan Toy Association, for example).

The batteries of Embodiments 1 and 2 of the invention do not cause a liquid leakage after short circuit and are reusable after short circuit without problems.

Accordingly, the batteries of the invention are improved in safety by preventing heat generation during an external short circuit without being degraded in performance under normal use.

Nickel hydrogen batteries and AA-size batteries, especially, AA-size nickel hydrogen batteries, are very widely used in electric appliances, toys, etc., so that the invention can be suitably applied to these batteries that are very widely used.

This is the end of the battery according to the invention, but the invention is not limited to the above-described embodiment.

For example, the embodiments use the protection layer of a two-layer structure. However, a protection layer including more than two layers or a protection layer including a single layer added with various protective constituents may be utilized. The embodiments mention an example in which a PTC thermistor is used in a positive tab. In the case of an alkaline storage battery with a negative tab, however, a PTC thermistor may be used in the negative tab, and the structure of the protection layer may be employed. Although the embodiments refer to a battery structure including the positive pantograph member, it is also possible to use a battery structure in which the positive tab is directly attached onto the positive plate, instead of using the positive pantograph member.

For example, in the above embodiments, the battery is a nickel hydrogen battery. The battery, however, is not limited to a nickel hydrogen battery and may be another battery as long as the same effects can be obtained as with the nickel hydrogen battery.

## Claims

1. A battery
- having a casing (1) provided with a positive terminal (5) and a negative terminal (12) on an outer surface; the casing containing a positive plate (6), a negative plate (7), and a separator (8); at least one of the terminals and the corresponding electrode plate being connected to each other by a conducting member (15) situated in the casing;
- the conducting member (15) including a PTC thermistor (20) in a portion exposed in an interior space (2a) in the casing; **characterized in that**
- the PTC thermistor (20) is coated with a flexible protection layer (25) that protects the PTC thermistor from an oxygen constituent and an alkaline constituent, which are contained in a gas atmosphere filled in the interior space of the casing,
- the protection layer (25) is configured in a multilayer structure including a flexible oxygen-proof protection layer (27) that covers the periphery of the PTC thermistor (20) and a flexible alkali-proof protection layer (29) that covers the periphery of the oxygen-proof protection layer (27),
- an internal resistance is equal to or lower than 70 mΩ, and that a temperature rise during an external short circuit at an ambient temperature of 23 °C with a margin of error of plus or minus 2 °C does not exceed 45 °C.

2. The battery according to claim 1, **characterized by** being an AA-size battery.

3. The battery according to claim 1 or 2, **characterized by** being a nickel hydrogen battery.

4. The battery according to one of the previous claims, **characterized in that**:
the conducting member (15) is a positive tab (15a, 15b) that conducts between the positive terminal (5) and the positive plate (6).

5. The battery according to one of the previous claims, **characterized in that**:
the oxygen-proof protection layer (27) is formed by coating the periphery of the PTC thermistor (20) with an epoxy resin member (27a); and
the alkali-proof protection layer (29) is formed by covering the periphery of the coating layer of the epoxy resin member (27a) with a plurality of strips of polypropylene tape (30).

## Patentansprüche

1. Batterie, mit
- einem Gehäuse (1), das an einer Außenfläche mit einem positiven Pol (5) und einem negativen Pol (12) versehen ist; wobei das Gehäuse eine positive Platte (6), eine negative Platte (7) und ein Trennelement (8) aufweist; wobei mindestens einer der Pole und die entsprechende Elektrodenplatte über ein im Gehäuse befindliches, leitendes Element (15) aneinander angeschlossen sind;
- wobei das leitende Element (15) einen PTC-Thermistor (20) in einem in einem Innenraum (2a) im Gehäuse freiliegenden Abschnitt aufweist;
**dadurch gekennzeichnet, dass**
- der PTC-Thermistor (20) von einer flexiblen Schutzlage (25) ummantelt ist, die den PTC-Thermistor gegenüber einem Sauerstoffbestandteil und einem alkalischen Bestandteil schützt, die in einer in den Innenraum des Gehäuses eingefüllten Gasatmosphäre enthalten sind,
- wobei die Schutzlage (25) in einer mehrlagigen Struktur ausgebildet ist, die eine flexible, sauerstoffbeständige Schutzlage (27), die die Außenseite des PTC-Thermistors (20) bedeckt, und eine flexible, alkalibeständige Schutzlage (29) aufweist, die die Außenseite der sauerstoffbeständigen Schutzlage (27) bedeckt,
- wobei ein Innenwiderstand gleich oder kleiner als 70 mΩ ist, und dass ein Temperaturanstieg bei einem externen Kurzschluss bei einer Umgebungstemperatur von 23°C mit einer Fehlergrenze von ±2°C nicht über 45°C hinausgeht.

2. Batterie nach Anspruch 1, **dadurch gekennzeichnet, dass** sie eine Batterie der Größe AA ist.

3. Batterie nach Anspruch 1 oder 2, **dadurch gekennzeichnet, dass** sie eine Nickel/Wasserstoff-Batterie ist.

4. Batterie nach einem der vorhergehenden Ansprüche,
**dadurch gekennzeichnet, dass**:
das leitende Element (15) eine positive Lasche (15a, 15b) ist, die zwischen dem positiven Pol (5) und der positiven Platte (6) leitet.

5. Batterie nach einem der vorhergehenden Ansprüche,
**dadurch gekennzeichnet, dass**:
die sauerstoffbeständige Schutzlage (27) gebildet wird, indem die Außenseite des PTC-Thermistors (20) mit einem Epoxidharzelement (27a) ummantelt wird; und
die alkalibeständige Schutzlage (29) gebildet wird, indem die Außenseite der Ummantelungslage des Epoxidharzelements (27a) mit mehreren Streifen aus einem Polyethylenband (30) bedeckt wird.

## Revendications

1. Pile
- comportant un boîtier (1) pourvu d'une borne positive (5) et d'une borne négative (12) sur une surface extérieure ; le boîtier contenant une plaque positive (6), une plaque négative (7), et un séparateur (8) ; au moins une des bornes et la plaque d'électrode correspondante étant connectées l'une à l'autre par un élément conducteur (15) situé dans le boîtier ;
- l'élément conducteur (15) incluant une thermistance CTP (20) dans une portion exposée dans un espace intérieur (2a) dans le boîtier ;
**caractérisée en ce que**
- la thermistance CTP (20) est revêtue d'une couche de protection flexible (25) qui protège la thermistance CTP (20) contre un composant d'oxygène et un composant alcalin, lesquels sont contenus dans une atmosphère de gaz logée dans l'espace intérieur du boîtier,
- la couche de protection (25) est configurée en une structure multicouche incluant une couche de protection flexible résistante à l'oxygène (27) qui recouvre la périphérique de la thermistance CTP (20) et une couche de protection flexible résistante aux alcalis (29) qui recouvre la périphérie de la couche de protection résistante à l'oxygène (27),
- une résistance interne est égale ou inférieure à 70 mΩ, et **en ce qu'**une hausse de température pendant un court-circuit externe à une température ambiante de 23 °C avec une marge d'erreur de plus ou moins 2 °C ne dépasse pas 45 °C.

2. La pile selon la revendication 1, **caractérisée en ce qu'**il s'agit d'une pile de taille AA.

3. La pile selon la revendication 1 ou 2, **caractérisée en ce qu'**il s'agit d'une pile au nickel-hydrogène.

4. La pile selon l'une des revendications précédentes, **caractérisée en ce que**
l'élément conducteur (15) est une languette positive (14a, 15b) qui conduit entre la borne positive (5) et la plaque positive (6).

5. La pile selon l'une des revendications précédentes, **caractérisée en ce que**
la couche de protection résistante à l'oxygène (27) est formée en revêtant la périphérie de la thermistance CTP (20) d'un élément en résine d'époxy (27a) ; et
la couche de protection résistante aux alcalis (29) est formée en recouvrant la périphérie de la couche de revêtement de l'élément en résine d'époxy (27a) d'une pluralité de bandes de ruban de polypropylène (30).
